# EUROPÄISCHE PATENTSCHRIFT

(11) **EP 3 287 669 B1**
(45) Veröffentlichungstag und Bekanntmachung des Hinweises auf die Patenterteilung: **05.05.2021**
(21) Anmeldenummer: 17154434.9
(22) Anmeldetag: 02.02.2017
(51) Int. Cl.: F16H 61/00, F16H 61/22, F16H 61/68, F16H 61/688, F16H 61/12

(54) **ANSTEUERUNGSVERFAHREN FÜR ANTRIEBSSTRANG UND GETRIEBEANORDNUNG FÜR ANTRIEBSSTRANG**
DRIVING METHOD FOR DRIVE TRAIN AND TRANSMISSION ASSEMBLY FOR DRIVE TRAIN
PROCÉDÉ DE COMMANDE D'UN GROUPE MOTOPROPULSEUR ET SYSTÈME DE TRANSMISSION POUR GROUPE MOTOPROPULSEUR

(30) Priorität: 05.04.2016 DE 102016106206
(43) Veröffentlichungstag der Anmeldung: 28.02.2018
(73) Patentinhaber: Magna PT B.V. & Co. KG, 74199 Untergruppenbach (DE)
(72) Erfinder: Jakob, Matthias, 74074 Heilbronn (DE)
(74) Vertreter: Rausch, Gabriele

(56) Entgegenhaltungen:
- EP-A2- 1 544 513
- DE-A1- 19 950 696
- JP-A- 2011 099 502

## Beschreibung

Die vorliegende Erfindung betrifft ein Verfahren zum Ansteuern eines automatisierten Antriebsstranges eines Kraftfahrzeuges, um das Kraftfahrzeug zu immobilisieren, wobei der Antriebsstrang eine Getriebeanordnung mit einer Mehrzahl von Gangstufen aufweist, die zumindest teilweise unabhängig voneinander schaltbar sind, wobei zur Immobilisierung eine Gangstufenpaarung geschaltet wird, die eine erste Paarungsgangstufe und eine zweite Paarungsgangstufe aufweist, um den Antriebsstrang zu blockieren.

Ferner betrifft die vorliegende Erfindung eine Getriebeanordnung für einen Kraftfahrzeug-Antriebsstrang, mit einer Mehrzahl von Gangstufen, die zumindest teilweise unabhängig voneinander schaltbar sind, wobei zur Immobilisierung des Kraftfahrzeuges eine Gangstufenpaarung geschaltet wird, die eine erste Paarungsgangstufe und eine zweite Paarungsgangstufe aufweist, um die Getriebeanordnung zu blockieren, und mit einem Steuergerät, das dazu ausgebildet und eingerichtet ist, ein Ansteuerungsverfahren der oben beschriebenen Art auszuführen.

Auf dem Gebiet der automatisierten Antriebsstränge ist es bekannt, ein damit ausgestattetes Kraftfahrzeug mittels einer Parksperrenanordnung einer Getriebeanordnung des Antriebsstranges zu immobilisieren.

Unabhängig von einer Handbremseinrichtung ist es beispielsweise bei manuellen Schaltgetrieben möglich, ein Wegrollen bei abgestelltem Antriebsmotor zu verhindern, indem eine Gangstufe geschaltet wird. Hierdurch werden die angetriebenen Räder des Kraftfahrzeuges über eine bei manuellen Schaltgetrieben in der Regel geschlossene Anfahrkupplung (normally closed) mit dem Verbrennungsmotor gekoppelt, so dass dessen Kompressionskraft auch im abgeschalteten Zustand zum Immobilisieren verwendbar ist.

Automatisierte Getriebeanordnungen beinhalten häufig Kupplungsanordnungen zwischen Getriebeanordnung und Antriebsmotor, die normalerweise geöffnet sind (normally open). In diesem Fall kann ein Wegrollen eines Kraftfahrzeuges durch Einlegen einer Gangstufe generell nicht verhindert werden, es sei denn, man würde Einfluss auf die Kupplung nehmen. Dies ist jedoch aus anderen Gesichtspunkten häufig nicht erwünscht. Bei Wandler-Automatikgetrieben ist eine Kupplungsanordnung zwischen Getriebeanordnung und Antriebsmotor durch einen Drehmomentwandler gebildet, der im vorliegenden Zusammenhang ebenfalls als "normally open" zu betrachten ist.

Die Parksperrenanordnungen, mit denen solche automatisierten Getriebeanordnungen daher typischerweise ausgestattet sind, beinhalten in der Regel ein mit einer Abtriebswelle der Getriebeanordnung starr verbundenes Parksperrenrad. An einem gehäusefesten Abschnitt der Getriebeanordnung ist eine Parksperrenklinke zwischen einer Freigabeposition und einer Parksperrenposition verschwenkbar. In der Parksperrenposition greift ein Klinkenzahn in eine Zahnlücke des Parksperrenrades, wodurch ein Verdrehen der Abtriebswelle verhindert wird, was zu einer Blockierung des Antriebsstranges und zu einer Immobilisierung eines damit ausgestatteten Kraftfahrzeuges führt.

Automatisierte Schaltgetriebe beinhalten automatisierte Handschaltgetriebe sowie Doppelkupplungsgetriebe. Automatisierte Handschaltgetriebe weisen häufig ebenfalls eine Anfahrkupplung auf, die normalerweise geöffnet (normally opened) ist. Auch derartige automatisierte Handschaltgetriebe beinhalten daher häufig eine Parksperrenanordnung der oben beschriebenen Art.

Doppelkupplungsgetriebe beinhalten zwei parallele Leistungsstränge, wobei jeder Leistungsstrang eine eigene Reibkupplung und ein hiermit verbundenes Teilgetriebe aufweist. Eines der Teilgetriebe ist dabei in der Regel den ungeraden Vorwärtsgangstufen zugeordnet und beinhaltet häufig eine gewöhnlich verwendete Anfahrgangstufe, typischerweise die Vorwärtsgangstufe 1. Das andere Teilgetriebe beinhaltet in der Regel gerade Gangstufen. Im Fahrbetrieb über eines der Teilgetriebe lässt sich in dem anderen Teilgetriebe eine Gangstufe bei zugeordneter geöffneter Reibkupplung vorwählen, so dass ein Gangwechsel anschließend durch überschneidende Betätigung der zwei Reibkupplungen erfolgen kann. Dies hat den Vorteil, dass Gangwechsel im Wesentlichen oder vollständig zugkraftunterbrechungsfrei durchgeführt werden können.

Die zwei Teilgetriebe weisen eine gemeinsame Ausgangswellenanordnung auf, die aus einer einzelnen Ausgangswelle oder aus zwei parallelen Ausgangswellen bestehen kann. Ein Parksperrenrad ist in der Regel mit einer Welle dieser Ausgangswellenanordnung verbunden.

Automatisierte Schaltgetriebe sind in der Regel in Vorgelegebauweise ausgeführt und beinhalten Radsätze, die mittels zugeordneter Schaltkupplungen in den Leistungsfluss schaltbar sind. Häufig sind hierbei zwei Schaltkupplungen zu einem Schaltkupplungspaket zusammengefasst, das mittels einer Schaltstange oder dergleichen automatisiert betätigbar ist.

Bei Wandler-Automatikgetrieben werden Gangstufen häufig durch Festlegen von einzelnen Gliedern von Planetenradsätzen mittels Bremsen oder Reibkupplungen eingerichtet.

In automatisierten Getriebeanordnungen der oben beschriebenen Art kann eine Immobilisierung des Kraftfahrzeuges auch dadurch erfolgen, dass in der Getriebeanordnung zwei Gangstufen gleichzeitig geschaltet sind. Bei automatisierten Handschaltgetrieben der oben beschriebenen Art können dies in der Regel zwei beliebige Gangstufen sein. Bei Doppelkupplungsgetrieben der oben beschriebenen Art sind die zwei Gangstufen, die zur Immobilisierung verwendet werden, einem der zwei Teilgetriebe zugeordnet.

Sofern zwei solche Gangstufen gleichzeitig geschaltet sind, führt dies bei einer Bewegung der angetriebenen Räder zu einem Verspannen des Antriebsstranges, da dieser versucht, unterschiedliche Übersetzungen gleichzeitig einzurichten. Dies führt zu einer Verspannung bzw. Blockade des Antriebsstranges und folglich zu einer Immobilisierung eines damit ausgestatteten Kraftfahrzeuges.

Ein Beispiel eines solchen automatisierten Doppelkupplungsgetriebes ist aus dem Dokument DE 199 50 696 A1 bekannt. In diesem Dokument wird vorgeschlagen, dass in einer Parksperrenfunktion zwei einer Getriebeeingangswelle zugeordnete Gänge gleichzeitig schaltbar sind. Die zwei Gänge sollen dabei entweder manuell schaltbar sein, können jedoch auch gleichzeitig automatisiert schaltbar sein. Die zwei gleichzeitig schaltbaren Gänge können dabei fest vorbestimmt sein, wobei es sich vorteilhafterweise um die größten nächstbenachbarten Gangstufen handeln soll. Alternativ können bei diesem Stand der Technik die zwei gleichzeitig schaltbaren Gänge weitgehend variabel wählbar sein. Dabei wird davon ausgegangen, dass sich beispielsweise bei einem Sechsganggetriebe für eine Getriebeeingangswelle eines Teilgetriebes drei Kombinationen von Gängen zur Realisierung der Parksperrenfunktion verwenden lassen. Wenn dabei beispielsweise eine bestimmte Kombination von Gängen mit höchster Priorität vorgegeben ist und wenn einer der beiden Gänge, zum Beispiel aufgrund ungünstiger Fluchtung von Klauen der zugeordneten Schaltkupplung, momentan nicht oder nur mit einer unzulässig hohen Stellkraft schaltbar ist, so soll es dort möglich sein, stattdessen den zunächst nicht vorgesehenen Gang zu schalten.

Die Parksperrenfunktion eines automatisierten Antriebsstranges unterliegt der sogenannten Funktionssicherheit (FuSi).

Wie in dem Dokument DE 199 50 696 A1 erkannt, kann es bei der gleichzeitigen Einlegung von Gangstufen mittels Schaltkupplungen dazu kommen, dass diese Gangstufen aufgrund einer ungünstigen Drehstellung (Zahn auf Zahn) nicht einlegbar sind. Selbst wenn anschließend eine andere Gangstufe geschaltet wird, kann es auch sein, dass auch diese Gangstufe nicht schaltbar ist, so dass in diesem Fall eine Parksperrenfunktion nicht realisierbar ist.

Aus dem Dokument DE 10 2007 019 241 A1 ist es ferner bekannt, zwei zur Immobilisierung verwendete Gangstufen in Abhängigkeit von Betrag und Richtung der Fahrbahnneigung zu wählen.

Ferner offenbart das Dokument DE 10 2008 008 127 A1 ein Doppelkupplungsgetriebe mit einer Hilfskupplung zum drehfesten Verriegeln von zwei Antriebswellen, die zum Lösen einer Parksperre unter Last lösbar ist. Das Einlegen der Parksperre beinhaltet hier das Schließen der Hilfskupplung und das Einlegen von zwei Gangstufen aus unterschiedlichen Teilgetrieben.

DE 199 50 696 A1 zeigt ein Verfahren zum Ansteuern eines automatisierten Antriebsstranges. Zur Immobilisierung des Kraftfahrzeugs werden Gangstufenpaare eingelegt. Bei automatisierter Schaltung der für die Parksperrenfunktion wirksamen Gänge ist vorgesehen, dass die zwei gleichzeitig schaltbaren Gänge weitgehend variabel wählbar sind. Dabei ist eine bestimmte Kombination von Gängen mit höchster Priorität vorgegeben.

Vor diesem Hintergrund ist es eine Aufgabe der Erfindung, ein verbessertes Verfahren zum Ansteuern eines automatisierten Antriebsstranges eines Kraftfahrzeuges mit dem Zweck der Immobilisierung des Kraftfahrzeuges sowie eine hierfür geeignete Getriebeanordnung anzugeben.

Die obige Aufgabe wird gemäß einem ersten Aspekt der Erfindung gelöst durch ein Verfahren zum Ansteuern eines automatisierten Antriebsstranges eines Kraftfahrzeuges, um das Kraftfahrzeug zu immobilisieren, wobei der Antriebsstrang eine Getriebeanordnung mit einer Mehrzahl von Gangstufen aufweist, die zumindest teilweise unabhängig voneinander schaltbar sind, wobei zur Immobilisierung eine Gangstufenpaarung geschaltet wird, die eine erste Paarungsgangstufe und eine zweite Paarungsgangstufe aufweist, um den Antriebsstrang zu blockieren, wobei zur Immobilisierung eine Mehrzahl von Gangstufenpaarungen zur Verfügung steht, die in einer Prioritätsliste abgespeichert sind, mit den Schritten, von einer zu verwendeten Gangstufenpaarung zunächst zu versuchen, die erste Paarungsgangstufe zu schalten, und in Abhängigkeit davon, ob dieser Versuch erfolgreich war, entweder zu versuchen, die zweite Paarungsgangstufe zu schalten, oder zu versuchen, eine erste Paarungsgangstufe einer in der Prioritätsliste folgenden Gangstufenpaarung zu schalten.

Das erfindungsgemäße Verfahren gemäß dem ersten Aspekt wird unmittelbar in Antwort auf den Erhalt eines Befehles zur Immobilisierung des Kraftfahrzeuges durchgeführt, so dass immer als erstes versucht wird, nur die erste Paarungsgangstufe der ersten Gangstufenpaarung der Prioritätsliste zu schalten.

Bei Durchführung des erfindungsgemäßen Verfahrens gemäß dem ersten Aspekt der Erfindung wird zunächst versucht, die erste Paarungsgangstufe zu schalten. Wenn die erste Paarungsgangstufe geschaltet werden konnte (was beinhaltet, dass diese bereits geschaltet war), wird in einem Folgeschritt versucht, auch die zweite Paarungsgangstufe dieser Gangstufenpaarung zu schalten.

Falls der Versuch, die erste Paarungsgangstufe der ersten Gangstufenpaarung zu schalten, nicht erfolgreich war, wird nicht versucht, die zweite Paarungsgangstufe dieser Gangstufenpaarung zu schalten. Stattdessen wird eine in der Prioritätsliste folgende Gangstufenpaarung ausgewählt und es wird dann versucht, die erste Paarungsgangstufe dieser folgenden Gangstufenpaarung zu schalten.

Die Prioritätsliste beinhaltet eine Mehrzahl von Gangstufenpaarungen, die in einer bestimmten Priorität zueinander bzw. nacheinander abgelegt sind. Wenn das Immobilisieren des Kraftfahrzeuges mittels der höchstpriorisierten Gangstufenpaarung nicht möglich ist, wird in der Regel die zweitpriorisierte Gangstufenpaarung verwendet, dann die dritte usw.

Gemäß des Erfindungsverfahrens, ist die Prioritätsliste aktualisierbar. Dies hat den Vorteil, dass die Prioritätsliste insbesondere in Abhängigkeit von einem bereits durchgeführten Versuch, eine bestimmte Gangstufenpaarung zu schalten, verändert wird. Dies führt wiederum dazu, dass die Immobilisierung beschleunigt und sicherer gemacht wird.

Da die Prioritätsliste aktualisierbar ist, ist die Reihenfolge und/oder die Anzahl der in der Prioritätsliste enthaltenen Gangstufenpaarungen dynamisch veränderbar bzw. aktualisierbar, und zwar in Abhängigkeit von einem bereits durchgeführten Versuch, eine Paarungsgangstufe zu schalten oder eine Gangstufenpaarung zu schalten, wobei die Aktualisierung davon abhängig ist, ob dieser Versuch erfolgreich war oder nicht.

Die Aktualisierung der Prioritätsliste erfolgt also immer dann, wenn ein Schaltversuch zum Einlegen einer Paarungsgangstufe erfolgreich oder erfolglos war.

Folglich ist es bei dem ersten Aspekt der Erfindung notwendig, dass die Prioritätsliste aktualisierbar ist und dass das Verfahren ferner den Schritt beinhaltet, für den Fall, dass der Versuch eine Paarungsgangstufe zu schalten, nicht erfolgreich war, sämtliche Gangstufenpaarungen in der Prioritätsliste zu sperren, die die nicht schaltbare Paarungsgangstufe beinhalten.

Folglich wird erreicht, dass unnötige Versuche vermieden werden, Gangstufenpaarungen zu realisieren, die die Paarungsgangstufe beinhalten, die bereits in einem vorherigen Schaltversuch nicht geschaltet werden konnte.

Gemäß einer weiteren bevorzugten Ausführungsform ist die Prioritätsliste aktualisierbar, wobei das Verfahren ferner den Schritt beinhaltet, für den Fall, dass der Versuch, die eine Paarungsgangstufe zu schalten, erfolgreich war, in der Prioritätsliste jene Gangstufenpaarung zu priorisieren, die die erste bereits geschaltete Paarungsgangstufe beinhaltet.

Hierdurch kann erreicht werden, dass unnötige Schaltversuche vermieden werden, mit denen versucht wird, eine Paarungsgangstufe einer Gangstufenpaarung einzulegen, die die erste - bereits geschaltete - Paarungsgangstufe nicht beinhaltet. Denn dies könnte ggf. bedeuten, dass die bereits geschaltete erste Paarungsgangstufe wieder ausgelegt werden müsste, um eine nächstfolgende Gangstufenpaarung einer nicht aktualisierten Prioritätsliste zu schalten.

Unter einem Priorisieren der Prioritätsliste wird verstanden, dass ggf. die Reihenfolge der Gangstufenpaarungen in der Prioritätsliste verändert wird.

Unter einem Sperren einer Gangstufenpaarung in der Prioritätsliste wird hingegen vorzugsweise verstanden, dass diese Gangstufenpaarung ggf. in der Prioritätsliste verbleibt, jedoch übersprungen wird, sofern sie in der Prioritätsreihenfolge an der Reihe wäre.

Bei dem erfindungsgemäßen Verfahren ist es vorteilhaft, wenn die Getriebeanordnung ein automatisiertes Schaltgetriebe aufweist. Im Falle eines automatisierten Handschaltgetriebes ist es bevorzugt, wenn die Anfahrkupplung zwischen Getriebe und Antriebsmotor als normalerweise geöffnete Kupplung ausgebildet ist. Ferner ist auch in diesem Fall vorgesehen, dass die Gangstufen zumindest teilweise unabhängig voneinander betätigbar sind.

Automatisierte Handschaltgetriebe, bei denen sämtliche Gangstufen mittels einer Schaltwalze betätigt werden, ermöglichen in der Regel nur das Einlegen einer einzelnen Gangstufe. Um auch in diesem Fall das erfindungsgemäße Verfahren durchzuführen, müssten zusätzliche Mittel vorgesehen werden, um zusätzlich zu einer mittels einer Schaltwalze geschalteten Gangstufe auch eine andere Gangstufe einer Gangstufenpaarung schalten zu können.

Insgesamt ist es jedoch bevorzugt, wenn die Getriebeanordnung ein Doppelkupplungsgetriebe mit einem ersten Teilgetriebe, das eine gewöhnlich verwendete Anfahrgangstufe (vorzugsweise die Vorwärtsgangstufe 1) beinhaltet, und mit einem zweiten Teilgetriebe aufweist, wobei die erste Paarungsgangstufe und die zweite Paarungsgangstufe von zumindest einer Gangstufenpaarung jeweils einem der zwei Teilgetriebe zugeordnet sind.

Dabei ist es von besonderem Vorzug, wenn die Prioritätsliste sowohl wenigstens eine Gangstufenpaarung beinhaltet, die dem ersten Teilgetriebe zugeordnet ist, als auch wenigstens eine Gangstufenpaarung beinhaltet, die dem anderen Teilgetriebe zugeordnet ist.

Mit anderen Worten können Gangstufenpaarungen sowohl jenem Teilgetriebe zugeordnet sein, dass die gewöhnlich verwendete Anfahrgangstufe nicht beinhaltet, als auch jenem Teilgetriebe zugeordnet sein, das die gewöhnlich verwendete Anfahrgangstufe beinhaltet.

Bei modernen Doppelkupplungsgetrieben ist es generell auch möglich, in Sondersituationen mittels einer Gangstufe anzufahren, die nicht die gewöhnlich verwendete Anfahrgangstufe ist, beispielsweise die Vorwärtsgangstufe 2.

Dies ermöglicht auch in solchen Fällen, bei denen die Gangstufenpaarung dem Teilgetriebe mit der gewöhnlich verwendeten Anfahrgangstufe zugeordnet ist, ein Unterstützen eines Auslegens der Gangstufenpaarung zum Aufheben der Immobilisierung, indem bei laufendem Motor und geöffneten Reibkupplungen eine Gangstufe des Teilgetriebes eingelegt und die zugeordnete Kupplung schlupfend betätigt wird, um die Verspannung aufgrund der geschalteten Gangstufenpaarung zu lösen oder verringern. Dies gilt insbesondere dann, wenn das Fahrzeug an einer Neigung abgestellt worden ist.

Gemäß einer weiteren insgesamt bevorzugten Ausführungsform ist die Prioritätsliste eine Funktion von wenigstens einem Betriebs- oder Umgebungsparameter des Antriebsstranges.

Vorzugsweise können zwei oder mehr unterschiedliche Prioritätslisten beispielsweise in einer Steuereinheit vorgehalten werden. In Abhängigkeit von dem wenigstens einen Betriebs- oder Umgebungsparameter wird dann bei Erhalt eines Immobilisierungsbefehls eine Prioritätsliste ausgewählt. Ein Beispiel eines solchen Betriebs- oder Umgebungsparameters kann der Zustand sein, in dem das Fahrzeug abgestellt wird. Beispielsweise an einer Steigung kann es bevorzugt sein, wenn die Prioritätsliste keine solchen Gangstufenpaarungen beinhaltet, die eine zum Anfahren geeignete Vorwärtsgangstufe aufweisen. In diesem Fall kann beim Aufheben der Immobilisierung diese Gangstufe ggf. dazu verwendet werden, um den Antriebsstrang bei laufendem Antriebsmotor und beispielsweise schleifender zugeordneter Reibkupplung zu entspannen, bevor die zur Immobilisierung verwendete Gangstufenpaarung ausgelegt wird.

Umgekehrt kann es für den Fall, dass das Fahrzeug an einem Gefälle abgestellt wird, sinnvoll sein, wenn die Prioritätsliste keine Gangstufenpaarung beinhaltet, die die Rückwärtsgangstufe beinhaltet, insbesondere keine Gangstufenpaarung beinhaltet, die jenem Teilgetriebe zugeordnet ist, das die Rückwärtsgangstufe aufweist.

Für diesen Fall ist es auch beim Abstellen eines Fahrzeuges an einem Gefälle möglich, durch Einlegen der Rückwärtsgangstufe und Andrücken der Reibkupplung den Antriebsstrang zu entlasten, bevor die zur Immobilisierung verwendete Gangstufenpaarung ausgelegt wird.

Der Betriebs- oder Umgebungsparameter ist vorzugsweise ein Parameter, wie er zum Zeitpunkt des Einleitens des Ansteuerns des Antriebsstranges zum Zwecke des Immobilisierens vorliegt, also bei Erhalt eines Immobilisierungsbefehls.

Gemäß einer weiteren insgesamt bevorzugten Ausführungsform beinhaltet wenigstens eine Gangstufenpaarung der Prioritätsliste die gewöhnlich verwendete Anfahrgangstufe der Getriebeanordnung.

Wie erläutert, kann in diesem Fall beim Abstellen des Fahrzeugs an einer Steigung (unter Steigung ist vorliegend eine Steigung bergauf zu verstehen) eine untere Gangstufe des anderen Teilgetriebes verwendet werden, um die Getriebeanordnung zu entspannen, bevor die zur Immobilisierung verwendete Gangstufenpaarung ausgelegt wird.

Generell kann ein Versuch, eine Paarungsgangstufe zu schalten, beinhalten, einen Aktuator eines automatisierten Getriebes einmal zu betätigen und die Schaltstellung der zugeordneten Schaltkupplung zu überwachen, und zwar für einen bestimmten Zeitraum. Falls nach Ablauf eines vorbestimmten Zeitraumes die Schaltstellung nicht erreicht wurde, könnte der Versuch in diesem Fall komplett abgebrochen werden.

Von besonderem Vorzug ist es jedoch, wenn jeder Versuch, eine Paarungsgangstufe zu schalten, beinhaltet, wenigstens zweimal zu versuchen, diese Paarungsgangstufe zu schalten.

Mit anderen Worten wird hierbei ein Aktuator einmal betätigt, und zwar für eine erste vorbestimmte Zeitspanne. Anschließend wird, falls ein Sensor eine Schaltstellung nicht positiv erfasst hat, der Aktuator abgeschaltet und nach einer Pause derselbe Aktuator noch einmal für eine zweite vorbestimmte Zeitspanne betätigt, um die Ziel-Paarungsgangstufe zu schalten. Erst wenn mehrfache derartige Versuche nicht erfolgreich waren, wird der Versuch insgesamt als erfolglos gewertet.

Die vorliegende Erfindung ist insbesondere auf ein Verfahren zum Ansteuern eines automatisierten Antriebsstranges gerichtet, bei dem eine Gangstufenpaarung geschaltet wird, um einen Antriebsstrang bzw. ein damit ausgestattetes Kraftfahrzeug zu immobilisieren, und zwar nach der Art einer Parksperre.

Mit den erfindungsgemäßen Verfahren wird, je nach Ausführungsform, wenigstens einer der folgenden Vorteile und/oder Merkmale erzielt. Es werden mehrere Gangstufenpaarungen in einem Katalog bzw. einer Prioritätsliste mit einer Priorisierung einer Reihenfolge dynamisch festgelegt. Vorzugsweise wird über einen Sensor ermittelt, ob eine Ziel-Paarungsgangstufe eingelegt werden konnte. Falls nein, erfindungsgemäß werden sämtliche Gangstufenpaarungen mit der nicht schaltbaren Paarungsgangstufe gestrichen. Ferner kann sich zusätzlich hierzu die Reihenfolge der Gangstufenpaarungen in der Prioritätsliste verändern, sofern mittels eines Sensors erkannt wird, dass eine erste Paarungsgangstufe einer Gangstufenpaarung bereits eingelegt werden konnte. Insgesamt wird der Einlegevorgang der Gangstufenpaarung zum Zwecke der Immobilisierung des Kraftfahrzeugs beschleunigt und sicherer gemacht.

Generell versteht sich, dass die Anzahl der Gangstufenpaarungen eine Funktion der Anzahl der zur Verfügung stehenden Gangstufen in der Getriebeanordnung ist. Bei einem Zwei-Ganggetriebe gibt es nur eine Gangstufenpaarung, so dass das vorliegende Verfahren nicht angewendet werden kann. Die Anzahl der Gangstufen der Getriebeanordnung beträgt vorzugsweise vier oder mehr, insbesondere sechs oder mehr und ist vorzugsweise kleiner als 12.

Bei einem Gruppengetriebe ist es in der Regel hinreichend, wenn eine Gangstufenpaarung von einer Getriebegruppe geschaltet wird, um das Kraftfahrzeug zu immobilisieren.

Ferner kann es zum Schalten einer Gangstufenpaarung hinreichend sein, zwei Schaltkupplungen der Getriebeanordnung zu schalten, die unterschiedlichen Schaltkupplungspaketen zugeordnet sind.

Die erfindungsgemäßen Ansteuerungsverfahren können vorteilhafterweise auf Fehler reagieren, wobei die Verfahren durch eine Regelschleife implementiert werden können, die die korrekte Ausführung der Immobilisierungs- bzw. Parksperrenfunktion überwacht.

Insgesamt ist eine Verbesserung der Funktionssicherheit (FuSi) erreichbar.

Ausführungsbeispiele der Erfindung sind in der Zeichnung dargestellt und werden in der nachfolgenden Beschreibung näher erläutert. Es zeigen:
Figur 1 : eine schematische Darstellung eines Antriebsstranges für ein Kraftfahrzeug, mit einer Getriebeanordnung in Form eines Doppelkupplungsgetriebes und mit einem Steuergerät, das dazu ausgebildet und eingerichtet ist, ein erfindungsgemäßes Ansteuerungsverfahren auszuführen;
Figur 2 : eine schematische Darstellung einer weiteren Ausführungsform eines Antriebsstranges für ein Kraftfahrzeug in Form eines beispielhaften Doppelkupplungsgetriebes, das vier Schaltkupplungspakete beinhaltet, die mittels Sensoren hinsichtlich ihrer Position überwacht werden;
Figur 3 : eine Tabelle von Gangstufenpaarungen in unterschiedlichen Prioritätslisten;
Figur 4A : einen ersten Teil eines Flussdiagrammes eines erfindungsgemäßen Ansteuerungsverfahrens;
Figur 4B : den zweiten Teil des Flussdiagrammes der Fig. 4A ; und
Figur 5 : eine schematische Darstellung eines weiteren Beispiels, das nicht zu der Erfindung gehört, eines Antriebsstranges für ein Kraftfahrzeug mit einem Doppelkupplungsgetriebe, das eine Brückenkupplung aufweist.

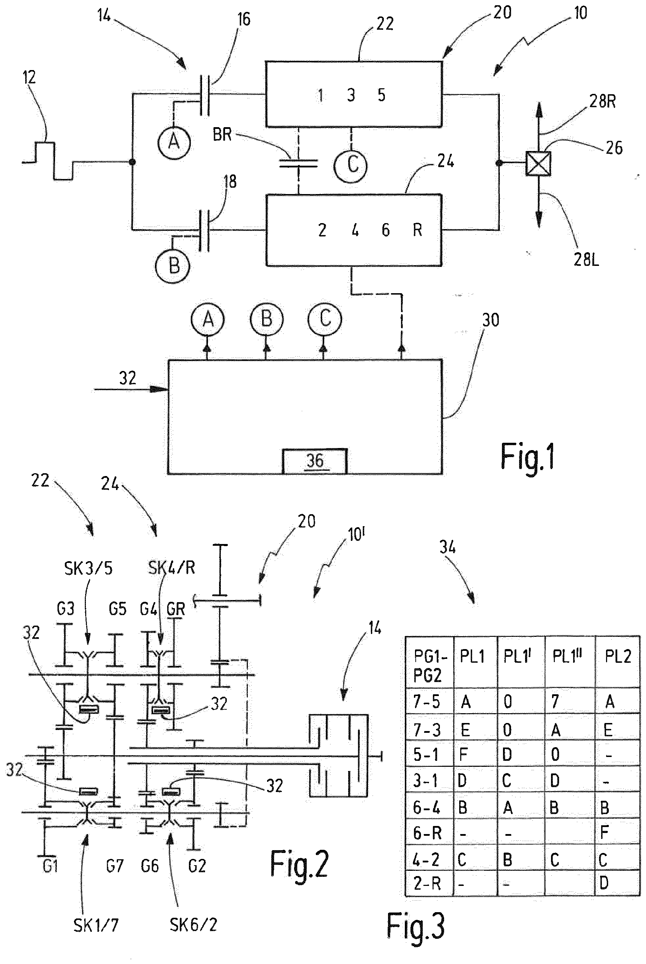

In Fig. 1 ist ein Antriebsstrang für ein Kraftfahrzeug schematisch dargestellt und generell mit 10 bezeichnet.

Der Antriebsstrang 10 beinhaltet einen Antriebsmotor 12, wie einen Verbrennungsmotor oder eine Hybrid-Antriebseinheit, dessen Ausgang mit einem Eingang einer Kupplungsanordnung 14 verbunden ist. Die Kupplungsanordnung 14 ist beispielhaft als Doppelkupplungsanordnung mit einer ersten Reibkupplung 16 und einer zweiten Reibkupplung 18 ausgebildet.

Der Antriebsstrang 10 beinhaltet ferner eine Getriebeanordnung 20, die beispielhaft ein erstes Teilgetriebe 22 und ein zweites Teilgetriebe 24 aufweist. Ein Eingang des ersten Teilgetriebes 22 ist mit einem Ausgangsglied der ersten Reibkupplung 16 verbunden. Ein Eingang des zweiten Teilgetriebes 24 ist mit einem Ausgangsglied der zweiten Reibkupplung 18 verbunden. Die Ausgänge der zwei Teilgetriebe 22, 24 sind mit einem Differential 26 verbunden, mittels dessen Antriebsleistung auf angetriebene Räder 28L, 28R verteilbar ist.

Die Getriebeanordnung 20 beinhaltet vorzugsweise keine Parksperrenanordnung im klassischen Sinne, also keine Parksperrenanordnung, die ein Parksperrenrad und eine Parksperrenklinke beinhaltet.

Die Kupplungsanordnung 14 und die Getriebeanordnung 20 bilden ein Doppelkupplungsgetriebe, das mittels einer Getriebe-Steuereinrichtung 30 ansteuerbar ist. Zu diesem Zweck ist die Steueranordnung 30 über nicht näher bezeichnete Aktuatoren mit der ersten Reibkupplung 16, der zweiten Reibkupplung 18 sowie mit Schaltkupplungspaketen des ersten Teilgetriebes 22 und Schaltkupplungspaketen des zweiten Teilgetriebes 24 gekoppelt, um diese bedarfsweise zu betätigen.

In Fig. 1 ist ferner bei BR schematisch eine Brückenkupplung angedeutet, die dazu ausgelegt ist, dass erste Teilgetriebe 22 und das zweite Teilgetriebe 24 derart miteinander zu Koppeln, dass wenigstens eine Windungsgangstufe schaltbar ist.

Ferner ist die Steuereinrichtung 30 mit Sensoren 32 gekoppelt, die beispielsweise den Schließgrad bzw. das übertragbare Drehmoment der Kupplungen 16, 18 angeben und/oder Schaltpositionen von Schaltkupplungen der Teilgetriebe 22, 24 angeben, um auf diese Weise überprüfen zu können, ob bestimmte Gangstufen geschaltet sind oder ausgelegt sind.

Die Steuereinrichtung 30 ist dazu ausgelegt und ist dazu eingerichtet, erfindungsgemäße Ansteuerungsverfahren für den automatisierten Antriebsstrang 10 zum Zwecke der Immobilisierung eines damit ausgestatteten Kraftfahrzeuges durchzuführen. Insbesondere ist es mittels der Steuereinrichtung 30 möglich, zur Immobilisierung eine Gangstufenpaarung zu schalten, die eine erste Paarungsgangstufe und eine zweite Paarungsgangstufe beinhaltet, um den Antriebsstrang 10 zu blockieren.

Insbesondere ist die Steuereinrichtung 30 dazu ausgelegt und eingerichtet, das nachstehend beschriebene Verfahren durchzuführen.

In Fig. 2 ist in schematischer Form ein beispielhafter Antriebsstrang 10' dargestellt, der eine Kupplungsanordnung 14 in Form einer Doppelkupplungsanordnung beinhaltet, sowie eine Getriebeanordnung 20 mit zwei Teilgetrieben 22, 24. Das erste Teilgetriebe beinhaltet Gangstufen G1, G3, G5, G7, wobei die Gangstufen G1, G7 mittels eines ersten Schaltkupplungspaketes SK1/7 schaltbar sind. Die Gangstufen G3 und G5 sind mittels eines zweiten Schaltkupplungspaketes SK3/5 schaltbar.

Das zweite Teilgetriebe 24 beinhaltet die Vorwärtsgangstufen G2, G4, G6 sowie die Rückwärtsgangstufe GR. Die Gangstufe G4 und die Rückwärtsgangstufe GR sind mittels eines Schaltkupplungspaketes SK4/R schaltbar. Die Gangstufen G6 und G2 sind mittels eines Schaltkupplungspaketes SK6/2 schaltbar.

In Doppelkupplungsgetrieben 20 werden zur Immobilisierung Gangstufenpaarungen geschaltet, deren Paarungsgangstufen jeweils einem der Teilgetriebe zugeordnet sind. Dabei können Gangstufen, die einem Schaltkupplungspaket zugeordnet sind, keine Gangstufenpaarung bilden, da diese Gangstufen nicht gleichzeitig miteinander geschaltet werden können, sondern nur alternativ zueinander.

Demzufolge ergibt sich für ein Doppelkupplungsgetriebe in Abhängigkeit von der Anzahl der Vorwärts- und Rückwärtsgangstufen eine bestimmte Anzahl von möglichen Gangstufenpaarungen, die zur Immobilisierung des Antriebsstranges geeignet sind.

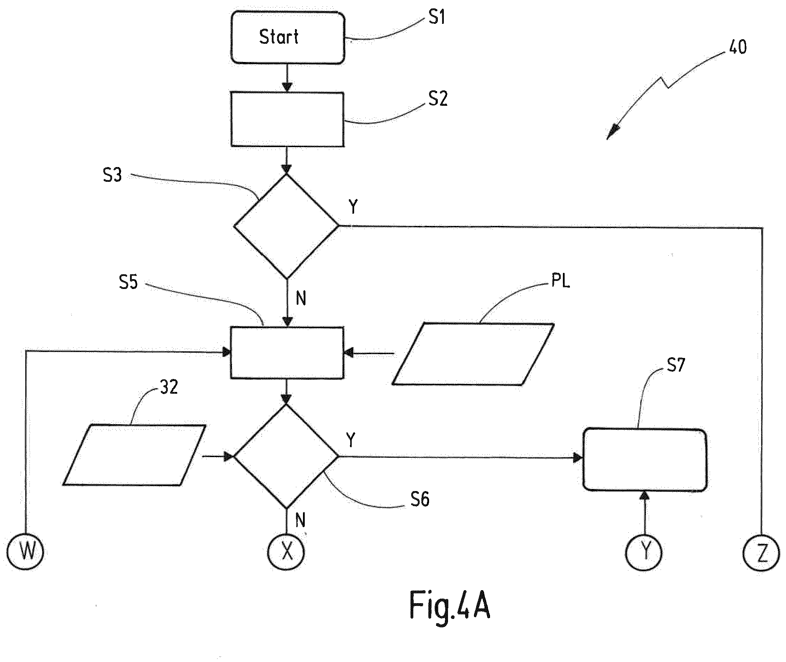

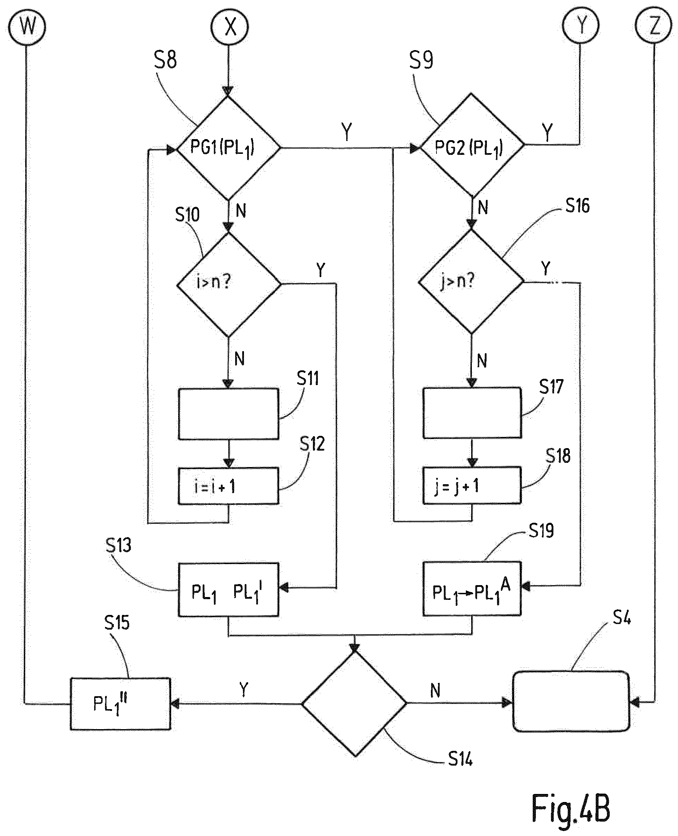

In Fig. 4 ist ferner angedeutet, dass jedem Schaltkupplungspaket vorzugsweise ein Sensor 32 zugeordnet ist, der die Position des Schaltkupplungspaketes überwacht und der jeweils mit der Steuereinrichtung 30 verbunden ist.

Fig. 3 zeigt eine Tabelle, die in einer ersten Spalte PG1-PG2 die möglichen Gangstufenpaarungen eines Doppelkupplungsgetriebes zeigt, und zwar hier des Doppelkupplungsgetriebes der Fig. 2 . Dies sind im Einzelnen die Gangstufenpaarungen 7-5, 7-3, 5-1, 3-1, 6-4, 6-R, 4-2, 2-R.

Aus dieser möglichen Anzahl von Gangstufenpaarungen wird zur Implementierung eines erfindungsgemäßen Verfahrens wenigstens eine Prioritätsliste gebildet. Fig. 3 zeigt zwei alternative Prioritätslisten PL1 und PL2.

Die Spalte mit der Überschrift PL1 gibt die Reihenfolge der in der ersten Spalte gezeigten Gangstufenpaarungen innerhalb der Prioritätsliste PL1 an, und zwar durch die alphabetischen Angaben A, B, C .... Demzufolge hat die Gangstufenpaarung 7-5 die höchste Priorität. Es folgen die Gangstufenpaarungen 6-4, 4-2, 3-1, 7-3 und 5-1.

In der Prioritätsliste PL1 sind Gangstufenpaarungen nicht enthalten, die die Rückwärtsgangstufe beinhalten. Dies hat den Vorteil, dass zum Auslegen der Gangstufenpaarung nach Beendigung der Immobilisierung die Rückwärtsgangstufe ggf. verwendet werden kann, um den Antriebsstrang zu entspannen, wenn das Fahrzeug beispielsweise an einem Gefälle (Steigung mit Neigung bergab) steht. Bei einem Parken des Fahrzeugs an einer Steigung (Neigung bergauf) kann dann entweder die Gangstufe 1 oder die Gangstufe 2 zum Entlasten des Antriebsstranges verwendet werden.

In Fig. 3 ist eine alternative Prioritätsliste in der Spalte PL2 gezeigt. Bei dieser Prioritätsliste PL2 ist die höchstpriorisierte Gangstufenpaarung ebenfalls die Gangstufenpaarung 7-5. Es folgen die Gangstufenpaarungen 6-4, 4-2, 2-R, 7-3, 6-R.

In der Prioritätsliste PL2 sind Gangstufenpaarungen ausgenommen, die die gewöhnlich verwendete Anfahrgangstufe beinhalten, nämlich die Gangstufenpaarungen 5-1, 3-1.

Die Prioritätslisten PL1, PL2 können zur Durchführung des erfindungsgemäßen Verfahrens beide in der Steuereinrichtung vorgehalten bzw. gespeichert sein und in Abhängigkeit bzw. als Funktion von wenigstens einem Betriebs- oder Umgebungsparameter des Antriebsstranges für die Durchführung des erfindungsgemäßen Verfahrens ausgewählt werden.

Die in Fig. 3 gezeigte Tabelle ist insgesamt mit 34 bezeichnet.

In der Fig. 4 , genauer in den Fig. 4A , 4B ist eine beispielhafte Implementierung eines erfindungsgemäßen Verfahrens zum Ansteuern eines automatisierten Antriebsstranges eines Kraftfahrzeuges zum Zwecke der Immobilisierung des Kraftfahrzeuges dargestellt.

Das Verfahren ist in Fig. 4A, Fig. B generell mit 40 bezeichnet und beginnt mit einem Startschritt S1, der eingeleitet wird, sobald das Steuergerät 30 einen Immobilisierungsbefehl erhält, beispielsweise von einer übergeordneten Steuerung, die beispielsweise mit einem Gangschalthebel bzw. Getriebebetätigungshebel des Kraftfahrzeuges gekoppelt ist. Insbesondere wird ein solcher Immobilisierungsbefehl ausgelöst, wenn dieser Hebel in eine Stellung "P" versetzt wird.

Nach Einleiten des Verfahrens erfolgt in Schritt S2 eine Anforderung der Parksperren- bzw. Immobilisierungsfunktion. Hierbei wird beispielsweise geprüft, ob die Kupplungsanordnung 14 tatsächlich geöffnet ist, wenn der Antriebsmotor in Betrieb ist. Ferner wird ggf. sichergestellt, dass die Kupplungsanordnung 14, insbesondere die Kupplungen 16, 18 geöffnet bleiben, so lange der Antriebsmotor läuft.

In einem darauf folgenden Schritt S3 wird ab gefragt, ob die Fahrzeuggeschwindigkeit größer 0 ist.

Während klassische Parksperrenanordnungen mit Parksperrenrad und Parksperrenklinke das Einleiten des Parksperrenvorganges auch dann zulassen, wenn eine sehr kleine Geschwindigkeit noch vorhanden ist, wird vorliegend in dem Schritt S3 abgefragt, ob die Geschwindigkeit größer ist als 0 Kilometer pro Stunde. Wenn dies der Fall ist (Y in S3) geht das Verfahren über zum Schritt S4 (Fig. 4B), in dem eine Fahrerwarnung optischer und/oder akustischer Art abgegeben wird. Mit anderen Worten wird dem Fahrer angezeigt, dass die Immobilisierungsfunktion nicht verfügbar ist.

Ausgehend von dem Schritt S4 muss dann ggf. das Verfahren bei S1 vollkommen neu gestartet werden, und/oder es wird nach dem Schritt S4 und so lange eine Immobilisierungsanforderung vorliegt, wieder zum Anfang des Schrittes S3 übergegangen.

Sofern das Fahrzeug vollkommen zum Stillstand gebracht worden ist, ergibt sich in Schritt S3, dass die Fahrzeuggeschwindigkeit gleich 0 ist, so dass das Verfahren mit N übergeht zum Schritt S5.

In Schritt S5 greift die Steuerung zu auf eine Prioritätsliste PL, die beispielsweise ausgewählt wird anhand eines Betriebs- oder Umgebungsparameter des Antriebsstranges, beispielsweise aufgrund dessen, ob das Fahrzeug in einer Ebene abgestellt wird, an einer Steigung oder an einem Gefälle.

Im Folgenden wird beispielhaft angenommen, dass als Prioritätsliste PL die Prioritätsliste PL1 der Fig. 3 ausgewählt wird, bei der es sich um einen Katalog zulässiger Gangstufenpaarungen für die Immobilisierungsfunktion handelt.

Im Schritt S5 wird dann von der Steuereinrichtung 3 an die Aktuatoren der höchstpriorisierten Gangstufenpaarung ein Schaltbefehl abgegeben, vorliegend die Gangstufenpaarung 7-5. Demzufolge werden beispielsweise Schaltkupplungspakete SK1/7 und SK3/5 dazu angesteuert, die Gangstufen 7 bzw. 5 einzulegen. In vielen Fällen können diese Gangstufen sofort eingelegt werden.

Im darauf folgenden Schritt S6 wird abgefragt, ob die Gangstufen eingelegt worden sind. Hierbei wird unter anderem auf die Sensordaten der Sensoren 32 zugegriffen, wodurch nämlich festgestellt wird, ob die Gangstufen 7 und 5 tatsächlich eingelegt worden sind.

Wenn dies der Fall ist (Y im Schritt S6), ist das Verfahren im Schritt S7 beendet.

In diesem Fall sind die Gangstufen 7 und 5 des gleichen ersten Teilgetriebes 22 eingelegt, wodurch der Antriebsstrang in sich verspannt bzw. blockiert wird und folglich die Parksperren- bzw. Immobilisierungsfunktion eingerichtet ist.

Sofern im Schritt S6 festgestellt wird, dass wenigstens eine der Gangstufen 7, 5 nicht eingelegt ist (N in Schritt S6), geht das Verfahren über zu Schritt S8. In Schritt S8 wird abgefragt, ob die erste Paarungsgangstufe 7 der Gangstufenpaarung 7-5 korrekt eingelegt ist.

Da der Schritt S8 eingeleitet wird, wenn eine der Gangstufen 7, 5 im Schritt S6 als nicht eingelegt erkannt worden ist, kann es sein, dass die Gangstufe 7 korrekt eingelegt ist. In diesem Fall (Y in Schritt S8) geht das Verfahren über zum Schritt S9, in dem abgefragt wird, ob die zweite Paarungsgangstufe 5 der Gangstufenpaarung 5-7 korrekt eingelegt ist. Wenn dies der Fall ist (was möglicherweise zwischenzeitlich der Fall sein kann aufgrund einer Bewegung des Kraftfahrzeuges oder dergleichen) (also Y in Schritt S9), geht das Verfahren über zum Schritt S7, wodurch das Verfahren wiederum erfolgreich beendet ist.

Im Folgenden wird angenommen, dass die erste Paarungsgangstufe 7 im Schritt S8 nicht korrekt eingelegt ist (N im Schritt S8), worauf das Verfahren zum Schritt S10 übergeht, mit dem ein Zähler i abgefragt wird, und zwar daraufhin, ob der Zähler größer ist als eine vorbestimmte natürliche Zahl n. Die Zahl n kann beispielsweise 1 sein, kann jedoch vorzugsweise 2 oder 3 sein.

Beim ersten Erreichen des Schleifenzählers S10 ist die Antwort in jedem Fall nein (N nach S10), worauf der Schritt S11 eingeleitet wird, mit dem erneut versucht wird, die erste Paarungsgangstufe PG1 (7) einzulegen.

Im Anschluss hieran wird in Schritt S12 der Zähler i um ein Inkrement erhöht (i = i+1), und die Schleife geht wieder zum Schritt S8, in dem erneut abgefragt wird, ob die erste Paarungsgangstufe eingelegt ist. Im Folgenden wird angenommen, dass dies wiederum nicht der Fall ist, so dass der Schritt S10 erneut erreicht wird. Nunmehr kann die Schleife S10, S11, S12 einmal oder mehrmals wiederholt werden.

Im Folgenden wird angenommen, dass ein Einlegen der ersten Paarungsgangstufe 7 nicht möglich ist, so dass schließlich, bei Erreichen des Zählstandes i > n im Schritt S10 (Y im Schritt S10) zum Schritt S13 übergegangen wird.

Im Schritt S13 wird die Prioritätsliste PL geändert, und zwar in eine Prioritätsliste PL1'. Genauer erfolgt im Schritt S13 ein Sperren sämtlicher Gangstufenpaarungen in der Prioritätsliste PL1, in denen die nicht einlegbare erste Paarungsgangstufe PG1 (hier 7) enthalten ist.

Wie es in Fig. 3 zu erkennen ist, bedeutet dies, dass die Gangstufenpaarungen 7-5 und 7-3 gesperrt werden (jeweils mit 0 eingetragen, so dass sich eine neue Prioritätsliste PL1' ergibt, mit der folgenden Prioritätsreihenfolge: 6-4, 4-2, 3-1, 5-1.

Nach dem Schritt S13 erfolgt im Schritt S14 eine Abfrage, ob in der Prioritätsliste weitere zulässige Gangstufenpaarungen vorhanden sind. Wenn dies nicht der Fall ist (N im Schritt S14) geht das Verfahren über zum Schritt S4, bei dem die Fahrerwarnung erfolgt und das Verfahren abgebrochen oder neu eingeleitet wird.

Wenn im Schritt S14 festgestellt wird, dass weitere Kombinationen bzw. Gangstufenpaarungen vorhanden sind (Y im Schritt S14), geht das Verfahren über zum Schritt S15. Im Schritt S15 erfolgt eine Priorisierung von Gangstufenpaarungen mit einem bereits korrekt eingelegten Gang.

Da nach dem Scheitern des Einlegens der ersten Paarungsgangstufe PG1 (7) möglicherweise noch gar keine Paarungsgangstufe eingelegt ist, kann im Schritt S15 entweder keine weitere Änderung der Prioritätsliste erfolgen (wovon vorliegend ausgegangen wird).

Wenn hingegen beispielsweise die zweite Paarungsgangstufe PG2 der höchstpriorisierten Gangstufenpaarung im Schritt S5 erfolgreich eingelegt worden ist, hat das Verfahren möglicherweise anschließend die Schritte S8 und S10 bis S12 und S13 durchlaufen, wobei immer die Gangstufe 5 (das heißt die zweite Paarungsgangstufe) eingelegt war. In diesem Fall erfolgt im Schritt S15 eine Priorisierung von Gangstufenpaarungen, die die bereits eingelegte Gangstufe beinhalten (neue Prioritätsliste PL"). Demzufolge würde in diesem Fall die Gangstufenpaarung 5-1 die höchste Priorität erhalten, da die Gangstufe 5 bereits eingelegt ist und anschließend nur noch die Gangstufe 1 eingelegt werden müsste, um das Immobilisierungsverfahren erfolgreich abzuschließen.

Vorliegend wird jedoch davon ausgegangen, dass die Gangstufe 5 ebenfalls nicht erfolgreich eingelegt war, so dass keine Änderung der Prioritätsliste PL1' erfolgt. Folglich geht das Verfahren über zum Schritt S5, bei dem wiederum versucht wird, eine Gangstufenpaarung zu schalten, und zwar nunmehr die nächstpriorisierte Gangstufenpaarung, das heißt die Gangstufenpaarung 6-4 der Prioritätsliste PL1'.

Anschließend wird wiederum im Schritt S6 geprüft, ob die beiden Paarungsgangstufen der Gangstufenpaarung 6-4 korrekt eingelegt worden sind, und das Verfahren geht entweder zu Ende (Schritt S7) oder es geht wiederum über in den Schritt S8, wo geprüft wird, ob die erste Paarungsgangstufe 6 eingelegt worden ist, usw.

Im Folgenden können auf diese Weise sämtliche zulässigen Gangstufenpaarungen der Prioritätsliste abgearbeitet werden, wobei die Prioritätsliste hierbei in Abhängigkeit von möglicherweise nicht einlegbaren Paarungsgangstufen oder eingelegten Paarungsgangstufen dynamisch verändert wird.

Im Folgenden wird alternativ davon ausgegangen, dass bei der ersten Abarbeitung des Schrittes S5 die erste Paarungsgangstufe PG1, hier die Gangstufe 7, korrekt eingelegt werden konnte, die Gangstufe 5 jedoch nicht. Demzufolge ergibt sich im Schritt S6 ein nein (N), da nicht beide Paarungsgangstufen der höchstpriorisierten Gangstufenpaarung 7-5 eingelegt worden sind. Das Verfahren geht folglich über zum Schritt S8. Hier wird abgefragt, ob die erste Paarungsgangstufe der Gangstufenpaarung 7-5 korrekt eingelegt worden ist.

Dies ist bei dieser alternativen Betrachtungsweise der Fall, so dass das Verfahren übergeht zum Schritt S9, in dem abgefragt wird, ob die Gangstufe 5 (zweite Paarungsgangstufe) korrekt eingelegt worden ist bzw. korrekt eingelegt ist. Die Antwort ist in diesem beispielhaften Fall N, so dass das Verfahren in eine Schleife S16, S17, S18 übergeht, die der Schleife S19, S11, S12 entspricht, wobei einmal oder mehrfach versucht wird, diese zweite Paarungsgangstufe 5 einzulegen bzw. zu schalten.

Wenn dies auch durch mehrfache Versuche nicht erreicht werden kann (Y im Schritt S16), geht das Verfahren über zum Schritt S19, mit dem sämtliche Gangstufenpaarungen in der Prioritätsliste gestrichen werden, die der nicht schaltbaren Paarungsgangstufe 5 zugeordnet sind.

Dies sind vorliegend sämtliche Kombinationen mit der Vorwärtsgangstufe 5, so dass die Gangstufenpaarung 5-1 aus der Prioritätsliste gestrichen wird, die anschließend zu einer Prioritätsliste PL1 <A>wird. Hierbei würde die Prioritätsreihenfolge der Prioritätsliste PL1 aufrechterhalten werden.

Da die erste Gangstufenpaarung 7-5 nicht richtig eingelegt werden konnte, aufgrund des Nichteinlegens der Gangstufe 5, würde dann nach dieser Prioritätsliste PL1 als nächstes die Gangstufenpaarung 6-4 herangezogen werden, um die Immobilisierung zu erreichen.

Nach dem Schritt S19 erfolgt jedoch im Schritt S14 die Abfrage, ob weitere Kombinationen vorhanden sind. Da dies der Fall ist (Y im Schritt S14), geht das Verfahren über zum Schritt S15, bei dem eine Priorisierung von Gangstufenpaarungen mit einer bereits korrekt eingelegten Gangstufe erfolgt.

Demzufolge geht das Verfahren über zum Schritt S15, in dem die Prioritätsliste PL1" erzeugt wird. Diese Prioritätsliste PL1" ist in Fig. 3 in der vierten Spalte dargestellt. Hierbei wird nämlich die Gangstufenpaarung 7-3 nunmehr mit der höchsten Priorität versehen, da die Gangstufe 7 bereits eingelegt ist. Die bislang höher priorisierte Gangstufenpaarung 6-4 rutscht dann auf die zweite Priorität B zurück.

Im darauffolgenden Schritt S5 wird folglich versucht, die Gangstufenpaarung der nächsthöheren Priorität einzulegen. Dies ist im jetzigen Fall die Gangstufenpaarung 7-3. In dem Schritt S5 wird folglich versucht, auch die Gangstufe 3 einzulegen.

Im Schritt S6 wird abgefragt, ob dies gelungen ist. In diesem Fall ist das Verfahren zu Ende (Schritt S7). Falls nein, geht das Verfahren erneut über zum Schritt S8, und von dort (erste Paarungsgangstufe erfolgreich eingelegt) direkt zum Schritt S9, wo dann die nunmehr zweite Paarungsgangstufe 3 daraufhin abgefragt wird, ob sie korrekt eingelegt ist.

Fall dies gelingt, ist das Verfahren zu Ende. Falls nein, wird aus der Prioritätsliste PL1" dann auch die Gangstufenpaarung 3-1 gestrichen, und es wird als nächstes versucht, die Gangstufenpaarung 6-4 zur Immobilisierung zu nutzen. Dies bedingt in diesem Fall, dass die bereits eingelegte Gangstufe 7 entweder gleich ausgelegt wird. Alternativ kann diese Gangstufe eingelegt bleiben, da die Immobilisierung nunmehr in dem anderen Teilgetriebe erfolgen wird.

Aus dem Obigen ergibt sich, dass durch das erfindungsgemäße Verfahren ein schnelles und sicheres Immobilisieren eines Kraftfahrzeuges unter Verwendung von zwei Paarungsgangstufen ermöglicht wird, so dass es nicht notwendig ist, die Getriebeanordnung 20 mit einer herkömmlichen Parksperrenanordnung auszustatten.

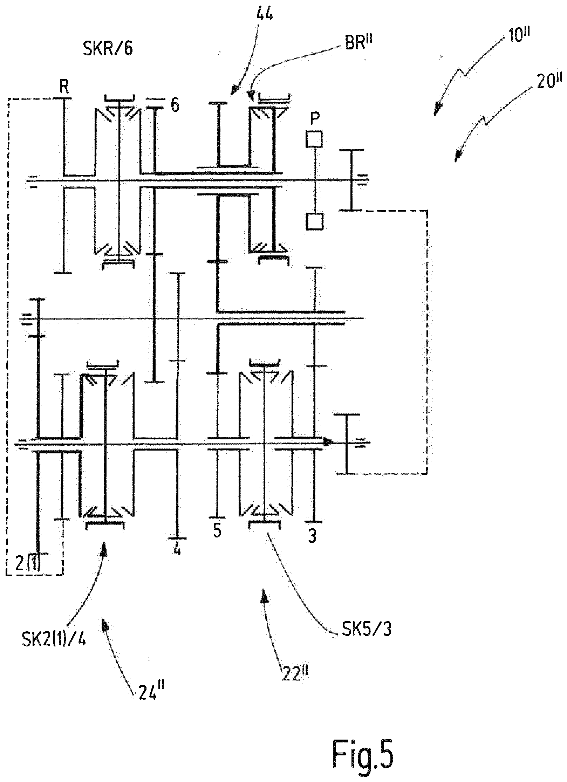

In Fig. 5 ist ein weiteres Beispiel, das nicht zu der Erfindung gehört, eines Antriebsstranges 10" gezeigt, der eine Getriebeanordnung 20" beinhaltet. Die Getriebeanordnung 20" ist als Doppelkupplungsgetriebe mit einem ersten Teilgetriebe 22" für die ungeraden Gangstufen und einem zweiten Teilgetriebe 24" für die geraden Gangstufen ausgebildet.

Eine Eingangs-Hohlwelle ist dabei dem ersten Teilgetriebe 22" zugeordnet. Das Doppelkupplungsgetriebe weist zwei nicht näher bezeichnete Vorgelegewellen auf, die, wie es in Fig. 5 rechts schematisch durch gestrichelte Linien angedeutet ist, über einen Abtriebsradsatz mit einem Differenzial oder dergleichen verbunden sein können.

Eine der Vorgelegewellen ist mit der Eingangs-Hohlwelle über einen Brückenradsatz 44 verbunden, der wiederum über eine Brückenkupplung BR" mit einem Losrad des anderen Teilgetriebes 24" verbindbar ist, im vorliegenden Fall das Losrad für die Vorwärtsgangstufe 6.

Zum Einrichten der Vorwärtsgangstufe 1 als Anfahrgangstufe ist es folglich möglich, die Brückenkupplung BR" zu schließen und Leistung über die Eingangs-Hohlwelle zuzuführen. Die Leistung wird dann über den Brückenradsatz 44 in den Radsatz für die Vorwärtsgangstufe 6 geleitet und von dort in den Radsatz für die Vorwärtsgangstufe 2, dessen zugeordnete Schaltkupplung zur Einrichtung dieser Windungsgangstufe ebenfalls geschlossen wird. Leistung wird dann über jene Vorgelegewelle auf den Abtrieb geführt, die der Vorwärtsgangstufe 2 zugeordnet ist. Zum Immobilisieren des Antriebsstranges 10" ist es zum einen wie bei dem Antriebsstrang 10" der Fig. 2 möglich, Gangstufenpaarungen zu nutzen, die Paarungsgangstufen aus den unterschiedlichen Teilgetrieben 22", 24" beinhalten, wobei die Brückenkupplung BR" geöffnet sein kann.

Bei geschlossener Brückenkupplung BR" ist es hingegen möglich, gleichzeitig beliebige Schaltkupplungen zu schließen, beispielsweise die Schaltkupplung für die Vorwärtsgangstufe 2 und zusätzlich eine weitere Gangstufe, die wahlweise dem ersten Teilgetriebe 22" oder dem zweiten Teilgetriebe 24"zugeordnet sein kann, also beispielsweise die Vorwärtsgangstufe 3, die Vorwärtsgangstufe 5, die Vorwärtsgangstufe 6 oder die Rückwärtsgangstufe R.

[Zum Lösen dieser Parksperrenfunktion ist diese weitere Paarungsgangstufe dann wiederum auszulegen. In diesem Fall ist vorzugsweise die Brückenkupplung BR" nach wie vor geschlossen, und die der Vorwärtsgangstufe 2 zugeordnete Schaltkupplung ist vorzugsweise ebenfalls geschlossen. Demzufolge kann dann aus diesem Zustand heraus unmittelbar angefahren werden, indem die der Eingangs-Hohlwelle zugeordnete Reibkupplung geschlossen wird.

Ein Schalten in die Vorwärtsgangstufe 2 kann dann durch Übergabe der Leistung auf die Eingangs-Innenwelle erfolgen, wobei die Brückenkupplung BR" geöffnet wird.

## Patentansprüche

1. Verfahren (40) zum Ansteuern eines automatisierten Antriebsstranges (10) eines Kraftfahrzeuges, um das Kraftfahrzeug zu immobilisieren, wobei der Antriebsstrang (10) eine Getriebeanordnung mit einer Mehrzahl von Gangstufen (1-7, R) aufweist, die zumindest teilweise unabhängig voneinander schaltbar sind, wobei zur Immobilisierung eine Gangstufenpaarung (PG1-PG2) geschaltet wird, die eine erste Paarungsgangstufe (PG1) und eine zweite Paarungsgangstufe (PG2) aufweist, um den Antriebsstrang (10) zu blockieren, wobei zur Immobilisierung eine Mehrzahl von Gangstufenpaarungen (PG1-PG2) zur Verfügung steht, die in einer Prioritätsliste (PL1-PL2) abgespeichert sind, mit den Schritten, von einer zu verwendeten Gangstufenpaarung (PG1-PG2) zunächst zu versuchen (S10-S12), die erste Paarungsgangstufe (PG1) zu schalten, und in Abhängigkeit davon, ob dieser Versuch erfolgreich war, entweder zu versuchen (S16-S18), die zweite Paarungsgangstufe (PG2) zu schalten, oder zu versuchen, eine erste Paarungsgangstufe einer in der Prioritätsliste (PL1; PL3) folgenden Gangstufenpaarung (PG1-PG2) zu schalten, wobei die Prioritätsliste (PL1; PL2) aktualisierbar ist und **dadurch gekennzeichnet, dass** das Verfahren (40) ferner den Schritt beinhaltet, für den Fall, dass der Versuch, eine Paarungsgangstufe (PG1; PG2) zu schalten, nicht erfolgreich war, sämtliche Gangstufenpaarungen in der Prioritätsliste (PL1; PL2) zu sperren (S 13 S15), die die nicht schaltbare Paarungsgangstufe beinhalten.

2. Verfahren nach Anspruch 1 , wobei die Prioritätsliste (PL1; PL2) aktualisierbar ist und wobei das Verfahren (40) ferner den Schritt beinhaltet, für den Fall, dass der Versuch, eine Paarungsgangstufe (PG1) zu schalten, erfolgreich war, in der Prioritätsliste (PL1; PL2) jene Gangstufenpaarungen zu priorisieren (S15), die die geschaltete Paarungsgangstufe (PG1) beinhalten.

3. Verfahren nach einem der Ansprüche 1 oder 2, wobei die Getriebeanordnung ein automatisiertes Schaltgetriebe aufweist.

4. Verfahren nach einem der Ansprüche 1 bis 3, wobei die Getriebeanordnung (20) ein Doppelkupplungsgetriebe mit einem ersten Teilgetriebe (22), das eine gewöhnlich verwendete Anfahrgangstufe (1) beinhaltet, und einem zweiten Teilgetriebe (24) aufweist, wobei die erste Paarungsgangstufe (PG1) und die zweite Paarungsgangstufe (PG2) von zumindest einer Gangstufenpaarung (PG1-PG2) jeweils einem der zwei Teilgetriebe (22, 24) zugeordnet sind.

5. Verfahren nach Anspruch 4, wobei die Prioritätsliste (PL1; PL2) sowohl wenigstens eine Gangstufenpaarung, die dem ersten Teilgetriebe (22) zugeordnet ist, als auch wenigstens eine Gangstufenpaarung beinhaltet, die dem anderen Teilgetriebe (24) zugeordnet ist.

6. Verfahren nach einem der Ansprüche 1 bis 5, wobei die Prioritätsliste (PL1; PL2) eine Funktion von wenigstens einem Betriebs- oder Umgebungsparameter des Antriebsstranges (10) ist.

7. Verfahren nach einem der Ansprüche 1 bis 6, wobei wenigstens eine Gangstufenpaarung der Prioritätsliste (PL1; PL2) die gewöhnlich verwendete Anfahrgangstufe (1) der Getriebeanordnung (20) beinhaltet.

8. Verfahren nach einem der Ansprüche 1 bis 7, wobei jeder Versuch, eine Paarungsgangstufe zu schalten, beinhaltet, wenigstens zweimal zu versuchen (S10-S12; S16-S18), diese Paarungsgangstufe zu schalten.

9. Getriebeanordnung (20) für einen Kraftfahrzeug-Antriebsstrang (10), mit einer Mehrzahl von Gangstufen (1-7, R), die zumindest teilweise unabhängig voneinander schaltbar sind, wobei zur Immobilisierung des Kraftfahrzeuges eine Gangstufenpaarung (PG1-PG2) geschaltet wird, die eine erste Paarungsgangstufe (PG1) und eine zweite Paarungsgangstufe (PG2) aufweist, um die Getriebeanordnung (20) zu blockieren, wobei zur Immobilisierung eine Mehrzahl von Gangstufenpaarungen (PG1-PG2) zur Verfügung steht, die in einer Prioritätsliste (PL1; PL2) abgespeichert sind, und mit einem Steuergerät (30), das dazu ausgebildet und eingerichtet ist, ein Ansteuerungsverfahren (40) nach einem der Ansprüche 1 bis 8 auszuführen.

## Claims

1. Method (40) for driving an automated drive train (10) of a motor vehicle, in order to immobilize the motor vehicle, wherein the drive train (10) has a transmission assembly with a multiplicity of gear stages (1-7, R) which can be shifted at least partially independently of one another, wherein to bring about immobilization, a gear stage pairing (PG1-PG2) which has a first pairing gear stage (PG1) and a second pairing gear stage (PG2) is shifted in order to lock the drive train (10), wherein in order to bring about immobilization, a multiplicity of gear stage pairings (PG1-PG2) are available and are stored in a priority list (PL1-PL2), comprising the steps: firstly attempting (S10-S12) to shift the first pairing gear stage (PG1) of a gear stage pairing (PG1-PG2) which is to be used, and, depending on whether this attempt was successful, either to attempt (S16-S18) to shift the second pairing gear stage (PG2), or to attempt to shift a first pairing gear stage of a gear stage pairing (PG1-PG2) which follows in the priority list (PL1; PL3), wherein the priority list (PL1; PL2) can be updated, and **characterized in that**
the method (40) also contains the step, in the event of the attempt to shift a pairing gear stage (PG1; PG2) not being successful, of locking (S13 S15) all the gear stage pairings in the priority list (PL1; PL2) which contain the non-shiftable pairing gear stage.

2. Method according to Claim 1, wherein the priority list (PL1; PL2) can be updated, and wherein the method (40) also contains the step, in the event of the attempt to shift a pairing gear stage (PG1) being successful, of prioritizing (S15) in the priority list (PL1; PL2) those gear stage pairings which contain the shifted pairing gear stage (PG1).

3. Method according to either of Claims 1 and 2, wherein the transmission assembly has an automated transmission.

4. Method according to one of Claims 1 to 3, wherein the transmission assembly (20) has a double clutch transmission with a first component transmission (22), which contains a customarily used starter gear stage (1), and a second component transmission (24), wherein the first pairing gear stage (PG1) and the second pairing gear stage (PG2) of at least one gear stage pairing (PG1-PG2) are each assigned to one of the two component transmissions (22, 24).

5. Method according to Claim 4, wherein the priority list (PL1; PL2) contains both at least one gear stage pairing which is assigned to the first component transmission (22), and at least one gear stage pairing which is assigned to the other component transmission (24).

6. Method according to one of Claims 1 to 5, wherein the priority list (PL1; PL2) is a function of at least one operating parameter or ambient parameter of the drive train (10).

7. Method according to one of Claims 1 to 6, wherein at least one gear stage pairing of the priority list (PL1; PL2) contains the customarily used starter gear stage (1) of the transmission assembly (20).

8. Method according to one of Claims 1 to 7, wherein each attempt to shift a pairing gear stage comprises attempting (S10-S12; S16-S18) at least twice to shift this pairing gear stage.

9. Transmission assembly (20) for a motor vehicle drive train (10), having a multiplicity of gear stages (1-7, R) which can be shifted at least partially independently of one another, wherein to bring about immobilization of the motor vehicle, a gear stage pairing (PG1-PG2) which has a first pairing gear stage (PG1) and a second pairing gear stage (PG2) is shifted in order to lock the transmission assembly (20), wherein in order to bring about immobilization a multiplicity of gear stage pairings (PG1-PG2) are available and are stored in a priority list (PL1; PL2), and having a control unit (30) which is designed and configured to carry out a driving method (40) according to one of Claims 1 to 8.

## Revendications

1. Procédé (40) de commande d'une chaîne cinématique automatisée (10) d'un véhicule automobile, afin d'immobiliser le véhicule automobile, la chaîne cinématique (10) comprenant un ensemble de transmission muni d'une pluralité de rapports (1-7, R), qui peuvent au moins partiellement être passés indépendamment les uns des autres, un appariement de rapports (PG1-PG2) étant passé pour l'immobilisation, qui comprend un premier rapport d'appariement (PG1) et un deuxième rapport d'appariement (PG2), afin de bloquer la chaîne cinématique (10), une pluralité d'appariements de rapports (PG1-PG2) étant disponibles pour l'immobilisation, qui sont enregistrés dans une liste de priorité (PL1-PL2), comprenant les étapes consistant à : tout d'abord tenter de passer (S10-S12), à partir d'un appariement de rapports (PG1-PG2) à utiliser, le premier rapport d'appariement (PG1) et, en fonction de si cette tentative a réussi, soit tenter de passer (S16-S18) le deuxième rapport d'appariement (PG2), soit tenter de passer un premier rapport d'appariement d'un appariement de rapports (PG1-PG2) suivant dans la liste de priorité (PL1 ; PL3), la liste de priorité (PL1 ; PL2) pouvant être actualisée, et **caractérisé en ce que** le procédé (40) contient en outre l'étape consistant, dans le cas où la tentative de passage d'un rapport d'appariement (PG1 ; PG2) n'a pas réussi, à bloquer (S13, S15) tous les appariements de rapports dans la liste de priorité (PL1 ; PL2) qui contiennent le rapport d'appariement ne pouvant pas être passé.

2. Procédé selon la revendication 1, dans lequel la liste de priorité (PL1 ; PL2) peut être actualisée et dans lequel le procédé (40) contient en outre l'étape consistant, dans le cas où la tentative de passage d'un rapport d'appariement (PG1) a réussi, à prioritiser (S15) dans la liste de priorité (PL1 ; PL2) les appariements de rapports qui contiennent le rapport d'appariement passé (PG1).

3. Procédé selon l'une quelconque des revendications 1 ou 2, dans lequel l'ensemble de transmission comprend une boîte de vitesses automatisée.

4. Procédé selon l'une quelconque des revendications 1 à 3, dans lequel l'ensemble de transmission (20) comprend une transmission à deux embrayages munie d'une première transmission partielle (22), qui contient un rapport de démarrage habituellement utilisé (1), et une deuxième transmission partielle (24), le premier rapport d'appariement (PG1) et le deuxième rapport d'appariement (PG2) d'au moins un appariement de rapports (PG1-PG2) étant chacun associés à une des deux transmissions partielles (22, 24).

5. Procédé selon la revendication 4, dans lequel la liste de priorité (PL1 ; PL2) contient aussi bien au moins un appariement de rapports, qui est associé à la première transmission partielle (22) qu'au moins un appariement de rapports, qui est associé à l'autre transmission partielle (24).

6. Procédé selon l'une quelconque des revendications 1 à 5, dans lequel la liste de priorité (PL1 ; PL2) est une fonction d'au moins un paramètre d'exploitation ou d'environnement de la chaîne cinématique (10).

7. Procédé selon l'une quelconque des revendications 1 à 6, dans lequel au moins un appariement de rapports de la liste de priorité (PL1 ; PL2) contient le rapport de démarrage habituellement utilisé (1) de l'ensemble de transmission (20).

8. Procédé selon l'une quelconque des revendications 1 à 7, dans lequel chaque tentative de passage d'un rapport d'appariement contient au moins deux tentatives (S10-S12 ; S16-S18) de passage de ce rapport d'appariement.

9. Ensemble de transmission (20) pour une chaîne cinématique de véhicule automobile (10), muni d'une pluralité de rapports (1-7, R), qui peuvent au moins partiellement être passés indépendamment les uns des autres, un appariement de rapports (PG1-PG2) étant passé pour l'immobilisation du véhicule automobile, qui comprend un premier rapport d'appariement (PG1) et un deuxième rapport d'appariement (PG2), afin de bloquer l'ensemble de transmission (20), une pluralité d'appariement de rapports (PG1-PG2) étant disponibles pour l'immobilisation, qui sont enregistrés dans une liste de priorité (PL1 ; PL2), et muni d'un appareil de commande (30), qui est configuré et conçu pour réaliser un procédé de commande (40) selon l'une quelconque des revendications 1 à 8.
